Europäisches Patentamt

**European Patent Office**

Office européen des brevets

(11) Veröffentlichungsnummer: **0 175 865**

**A2**

(12) **EUROPÄISCHE PATENTANMELDUNG**

(21) Anmeldenummer: **85108818.7**

(22) Anmeldetag: **15.07.85**

(51) Int. Cl.⁴: **A 01 B 15/14**

(30) Priorität: **20.09.84 DE 3434483**

(43) Veröffentlichungstag der Anmeldung:
**02.04.86 Patentblatt 86/14**

(84) Benannte Vertragsstaaten:
**FR GB NL**

(71) Anmelder: **Rabewerk Heinrich Clausing**

**D-4515 Bad Essen 1(DE)**

(72) Erfinder: **Groth, Hermann, Dipl.-Ing.**
**Im Weidengrund 7**
**D-4515 Bad Essen 1(DE)**

(74) Vertreter: **Missling, Arne, Dipl.-Ing. et al,**
**Patentanwälte Dipl.-Ing. R. Schlee Dipl.-Ing. A. Missling**
**Bismarckstrasse 43**
**D-6300 Giessen(DE)**

(54) **Zusatzpflugkörper für die Vergrösserung der Schnittbreite von Pflügen für das Grenzpflügen.**

(57) Zusatzpflugkörper werden im hinteren Bereich des Pflugrahmens an einer Halterung befestigt, um die Schnittbreite des Pfluges, insbesondere für das Grenzpflügen, zu vergrössern. Ein besonders vorteilhafter Zusatzpflugkörper (9) ist in Form eines Streichbleches ausgebildet und vorteilhaft aus einem einzigen Stahlblechstück geformt. Die Größe des Zusatzpflugkörpers (9) ist kleiner als die der übrigen Pflugkörper (2) des Pfluges, wobei seine Arbeitstiefe um mindestens die halbe Anlagenhöhe des letzten Pflugkörpers (2) kleiner ist.

Fig. 1

Patentanwälte

Dipl.-Ing. Richard Schlee
Dipl.-Ing. Arne Missling

6300 Lahn-Giessen
Bismarckstrasse 43
Telefon: (0641) 71019

**0175865**

Rabewerk Heinrich Clausing
4515 Bad Essen 1

## Zusatzpflugkörper für die Vergrößerung der Schnittbreite von Pflügen für das Grenzpflügen

Die Erfindung betrifft einen Zusatzpflugkörper für die Vergrößerung der Schnittbreite von Pflügen für das Grenzpflügen, der an einem im hinteren Bereich des Pflugrahmens in einer Halterung befestigten Arm gehaltert ist.

Bei drei- oder vierfurchigen Pflügen ist es häufig der Fall, daß die Arbeitsbreite des Pfluges gerade nicht mehr ausreicht, die volle Schlepperbreite zu erfassen. Gelangt man beim Pflügen an den Feldrand, so bleibt häufig ein Streifen ungepflügt, der in etwa der Breite eines Pflugkörpers entspricht. Der Schlepperfahrer ist hier gezwungen, um den Streifen so klein wie möglich zu halten, haarscharf an einem Zaun, einer Mauer oder einem Gebüsch entlangzupflügen. Häufig ist es auch nicht möglich, das Nachbarfeld zu befahren, zumal wenn dieses bereits bestellt ist oder aber als Feldgrenze ein Graben etc. vorhanden ist.

Bekannt ist es, um auch mit derartigen Pflügen bis zur Grenze hin pflügen zu können, diese Pflüge als sog. Grenzpflüge auszubilden, wobei der Pflugrahmen relativ zum Schlepper seitlich verschoben wurde. Dies war bei den bisherigen zwei- und allenfalls dreifurchigen Pflügen möglich, da diese im Vergleich zu den heute eingesetzten Pflügen ein relativ geringes Gewicht aufgewiesen haben. Bei den heutigen schweren Pflügen ist die Ausbildung dieser Pflüge zu Grenzpflügen jedoch mit einem vertretbaren Aufwand nicht mehr möglich.

Bekannt ist es, seitlich neben oder hinter dem letzten Pflugkörper einen weiteren Hilfspflugkörper anzubauen, der nur zum Pflügen der letzten Furche am Feldrand zum Einsatz gelangt. Dieser Pflugkörper ist als Scheibenpflugkörper ausgebildet und an einem Arm am Pflugrahmen befestigt, der wegklappbar ausgebildet ist, so daß der Pflugkörper nur bei der letzten Furche zum Einsatz gelangt. Derartige Scheibenpflugkörper sind jedoch relativ aufwendig in der Herstellung und ergeben je nach ihrer Einstellung eine mehr oder weniger tiefe abgerundete Furche. Bei diesen Pflugkörpern handelt es sich um hohe Scheiben, deren Arbeitsseite konkav ausgebildet ist und die in der Herstellung teuer sind. Des weiteren sind hier starke und aufwendige Lager erforderlich, was die Einrichtung weiter verteuert.

Der Erfindung liegt die Aufgabe zugrunde, einen Zusatzpflugkörper der eingangs genannten Art so auszubilden, daß dieser zum einen kostengünstig in der Herstellung ist und zum anderen ein besseres Wenden des Erdbodens gestattet als die bekannten Scheibenpflugkörper.

Diese Aufgabe wird mit den Merkmalen des kennzeichnenden Teiles des Anspruches 1 gelöst.

Die Erfindung geht von der Überlegung aus, daß es für das Grenzpflügen ausreichend ist, einen Pflugkörper zu haben, der entweder rechts- oder linkswendend ist, mit dem der letzte Streifen am Feldrand gepflügt werden kann. Da darüber hinaus dieser Pflugkörper nur äußerst selten im Vergleich mit den übrigen Pflugkörpern zum Einsatz kommt, kann dieser Pflugkörper darüber hinaus auch in seinem Aufbau wesentlich kostengünstiger ausgeblidet werden, wenn dieser aus einem einstückigen Stahlblechstück geformt wird. Darüber hinaus wird als Form des Pflugkörpers nicht ein Scheibenpflugkörper verwendet, sondern ein Streichblechpflugkörper, der ein besseres Wenden des Erdreiches gestattet und darüber hinaus auch einstellbar gehalten werden kann, so daß die Stellung des Pflugkörpers dem jeweils bearbeiteten Erdreich anpaßbar ist. Darüber hinaus ist der Pflugkörper über einen Arm am Pflugrahmen befestigt, der in einer Halterung eingesteckt ist, die eine Verstellung der Arbeitstiefe und der Arbeitsbreite des Pflugkörpers gestattet. Die Arbeitstiefe dieses Zusatzpflugkörpers ist so gewählt, daß diese zumindest um die halbe Anlagenhöhe des letzten Pflugkörpers geringer ist als die des letzten Pflugkörpers. Hierdurch kann mit dem letzten Pflugkörper ein ausreichender Anlagedruck erhalten werden, so daß beim Zusatzpflugkörper auf eine zusätzliche Anlage verzichtet werden kann, was dessen Herstellung weiter verbilligt. Da darüber hinaus die letzte Furche nicht mit gleicher Tiefe und gleicher Breite wie die übrigen Furchen hergestellt zu werden braucht bzw. eine tiefe Endfurche nachteilig ist, kann darüber hinaus der Pflugkörper kleiner gewählt werden als die übrigen Pflugkörper des Pfluges. So ist es z.B. ausreichend, wenn der Zusatzpflugkörper die normale Furche nur zu etwa drei Viertel zudeckt, wobei dann gleichfalls der Zusatzpflugkörper nicht zu tief in den Erdboden eingreift, so daß ein gewünscht flacher Auslauf am Feldrand erhalten wird.

Die verstellbare Anordnung des Hilfspflugkörpers am Pflug ist z.B. dann erforderlich, wenn als Hauptpflugkörper solche mit unterschiedlicher Größe verwendet werden. In diesem Fall kann der Hilfspflugkörper in der Halterung sowohl in der Arbeitstiefe wie auch in der Arbeitsbreite eingestellt werden, so daß die erwünschte Form der Feldgrenze erhalten wird.

Die Verstellung der Arbeitstiefe und Arbeitsbreite des Zusatzpflugkörpers kann entweder mittels einer Halterung erfolgen, die zur Grindelrichtung in einem spitzen Winkel angeordnet ist. Hierdurch erhält man bei der Verschiebung des Armes in der Tasche gleichzeitig sowohl eine Breiten- wie auch eine Tiefenänderung. Es ist auch denkbar, die beiden Halterungen für die Breitenänderung und die Tiefenänderung des Zusatzpflugkörpers getrennt anzuordnen, was zum einen den Vorteil hat, daß die Arbeitsbreite und Arbeitstiefe getrennt einstellbar sind und was zum anderen den Vorteil mit sich bringt, daß auch der Anstellwinkel bzw. die Neigung zur Fahrtrichtung des Zusatzpflugkörpers relativ zum Grindel einstellbar ist, z.B. durch einen Unterlegkeil, der zwischen dem Pflugkörper und der Halterung eingelegt wird.

Weitere vorteilhafte Ausgestaltungen der Erfindung gehen aus den Unteransprüchen in Verbindung mit Beschreibung und Zeichnung hervor.

Zwei Ausführungsbeispiele der Erfindung sind im folgenden anhand der Zeichnung näher beschrieben, in dieser zeigen:

Fig. 1+2   eine Seitenansicht und eine Draufsicht auf ein Pflugende mit einem angebauten Zusatzpflugkörper, und

Fig. 3+4   ein weiteres Ausführungsbeispiel in einer Seitenansicht und einer Draufsicht eines Pflugendes mit einem Zusatzpflugkörper.

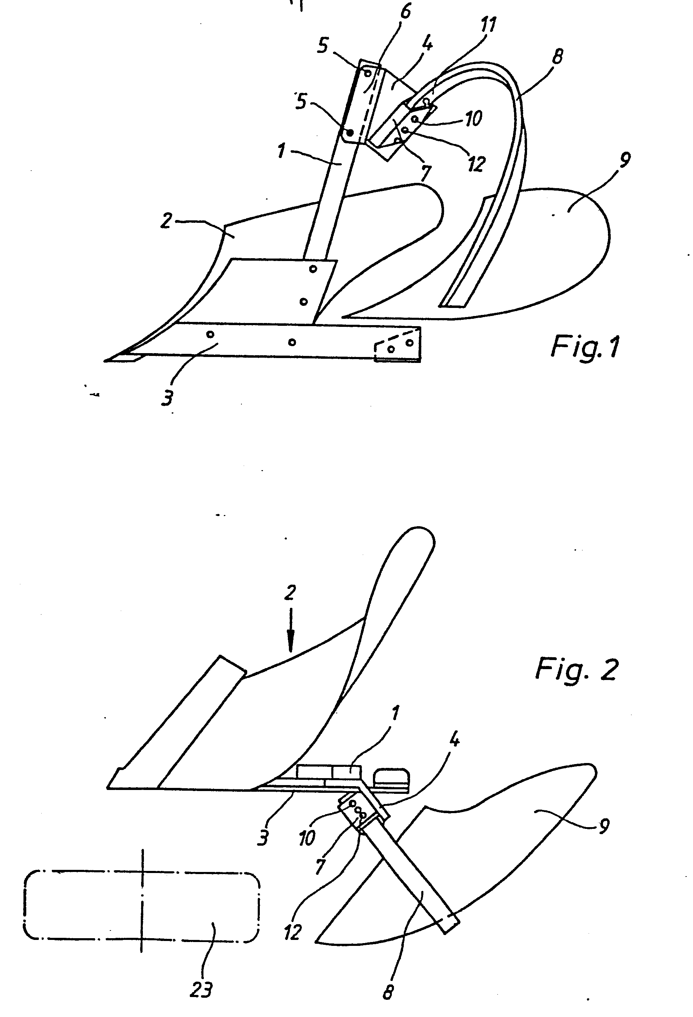

In den Fig. 1 und 2 ist das hintere Ende eines Pfluges mit seinem Grindel 1 und dem letzten Pflugkörper 2 dargestellt. Der Pflugkörper 2 ist mit einer Anlage 3 versehen. Am Grindel 1 ist eine Halterung 4 angeschraubt, und zwar mit den gleichen Befestigungsschrauben 5, mit denen das Grindel 1 an nicht dargestellten Konsolen des Pflugrahmens befestigt ist.

Die Halterung 4 besteht aus einer Befestigungslasche 6, mit der die Halterung 4 am Grindel 1 angeschraubt ist,und einer Tasche 7, in die ein Arm 8 eingesteckt ist, an dem der Zusatzpflugkörper 9 befestigt ist. Der Zusatzpflugkörper kann im einfachsten Fall am Arm 8 angeschweißt sein.

In der Tasche 7 sind mehrere Bohrungen 10 angebracht, desgleichen sind entsprechende Bohrungen 11 im Arm 8 angeordnet. Der Arm 8 wird in die Tasche 7 eingeschoben und mittels eines Bolzens 12 gehaltert.

Da die Tasche 7 schräg zum Grindel 1 angeordnet ist, wird beim Einschieben des Armes 8 in die Tasche oder beim Herausziehen desselben aus der Tasche 7 sowohl die Arbeitstiefe des Zusatzpflugkörpers wie auch dessen Arbeitsbreite verändert. Die Arbeitstiefe ist vorteilhaft um den Betrag der Höhe der Anlage 3 des Pflugkörpers 2 geringer als die des Pflugkörpers 2. Hierdurch ist gewährleistet, daß die Anlage 3 einen entsprechend großen Druck auf das Erdreich ausüben kann, so daß die Führung des Pfluges gewährleistet bleibt.

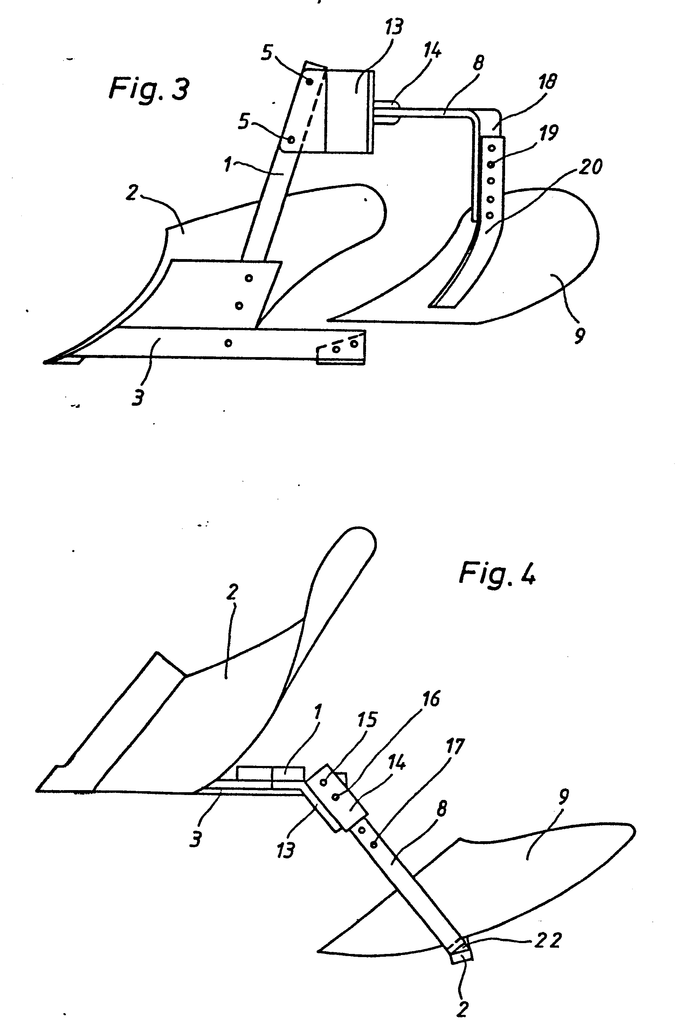

Bei dem in den Fig. 3 und 4 gezeigten Ausführungsbeispiel sind gleiche Teile mit gleichen Bezugszeichen versehen. Der Pflugkörper 2 ist gleich aufgebaut wie der in Fig. 1. Der Unterschied zu dem Ausführungsbeispiel nach Fig. 1 und 2 besteht darin, daß die Halterung 4 aufgeteilt worden ist, und zwar in eine Halterung 13, die am Grindel 1 befestigt ist und eine Tasche 14 aufweist, die eine Verschiebung des Armes 8 in horizontaler Ebene zuläßt. Die Sicherung des Armes 8 in der Tasche 14 erfolgt auch hier wiederum mittels eines Bolzens 15, der durch die in der Halterung 13 sowie im Arm 8 angeordneten Bohrungen 16, 17 geschoben ist.

Der Arm 8 ist mit seinem Ende 18 nach unten abgekröpft und mit Bohrungen versehen, die den gleichen Abstand zueinander haben wie entsprechende Bohrungen 19 einer Lasche 20, die mit dem Hilfspflugkörper 9 verbunden ist. Zur Befestigung des Hilfspflugkörpers 9 am Ende 18 des Armes 8 dienen Schrauben 21, die das Ende 18 des Armes 8 mit der Lasche 20 verbinden.

Zur Einstellung der Neigung des Zusatzpflugkörpers 9 relativ zum Pflugrahmen ist ein Keil 22 vorgesehen, der zwischen der Lasche 20 und dem Ende 18 des Armes 8 eingelegt ist. Je nach Lage und Stärke des Keiles ist die Neigung des Zusatzpflugkörpers in weitem Umfang einstellbar, so daß die Wendeeigenschaft dieses Zusatzpflugkörpers den jeweiligen Erfordernissen anpaßbar ist.

In den Fig. 1 und 2 ist ein Tastrad dargestellt, das für eine sichere Funktion mit Abstand neben der Spitze des letzten Pflugkörpers angeordnet sein sollte, um einen Einbruch der Furchenwand sowie Verstopfungen zu vermeiden. Pflüge, die mit derartigen Talrädern ausgestattet sind, gestatten gleichermaßen kein Grenzpflügen, auch wenn diese über die Schlepperbreite hinausragen sollten. Auch bei diesen Pflügen ist ein Zusatzpflugkörper, wie er mit der Erfindung vorgeschlagen ist, mit Vorteil einsetzbar, ohne daß hier größere Umbauten am Tastrad vorzunehmen sind. Das Tastrad als solches bleibt unverändert, während der Zusatzpflugkörper entsprechend der Abbildung in Fig. 2 angeordnet ist.

Ansprüche:

1. Zusatzpflugkörper für die Vergrößerung der Schnittbreite von Pflügen für das Grenzpflügen, der an einem im hinteren Bereich des Pflugrahmens in einer Halterung befestigten Arm gehaltert ist, dadurch gekennzeichnet, daß der Zusatzpflugkörper (9) die Form eines Streichblechpflugkörpers aufweist und vorzugsweise aus einem einzigen Stahlblechstück geformt ist, daß die Größe des Zusatzpflugkörpers (9) kleiner als die der übrigen Pflugkörper (2) des Pfluges ist und daß seine Arbeitstiefe um mindestens die halbe Anlagenhöhe des letzten Pflugkörpers (2) kleiner ist.

2. Zusatzpflugkörper nach Anspruch 1, dadurch gekennzeichnet, daß der Zusatzpflugkörper (9) über eine Halterung am Pflugrahmen befestigt ist, die ein Wegklappen oder ein schnelles Lösen gestattet.

3. Zusatzpflugkörper nach Anspruch 1 oder 2, dadurch gekennzeichnet, daß der Zusatzpflugkörper (9) über eine Halterung (4, 13, 19, 20) mit dem Pflug verbunden ist, die eine Einstellbarkeit der Arbeitsbreite und -tiefe des Zusatzpflugkörpers (9) zuläßt.

4. Zusatzpflugkörper nach einem der Ansprüche 1 bis 3, dadurch gekennzeichnet, daß die Halterung (4) eine Tasche (7) aufweist, die den Arm (8) des Zusatzpflugkörpers (9) aufnimmt und in die der Arm (8) in unterschiedlichen Stellungen festlegbar ist, und daß die Tasche (7) in einem spitzen Winkel zum Grindel (1) angeordnet ist.

5. Zusatzpflugkörper nach einem der Ansprüche 1 bis 4, dadurch gekennzeichnet, daß die Halterung (13) zwei Befestigungselemente aufweist, von denen das eine (14) etwa senkrecht und das andere (19, 20) etwa parallel zur Anlage des letzten Pflugkörpers angeordnet ist, daß ein Befestigungselement (14) am Pflug und das andere (19, 20) am Zusatzpflugkörper (9) angeordnet ist, und daß in diesen Befestigungselementen der Arm (8) verschiebbar gehaltert ist.

6. Zusatzpflugkörper nach einem der Ansprüche 1 bis 5, dadurch gekennzeichnet, daß die Halterung (4, 13, 19, 20) für den Zusatzpflugkörper (9) mit den für die Befestigung des Grindels dienenden Schrauben (5) befestigt ist.

7. Zusatzpflugkörper nach einem der Ansprüche 1 bis 6, dadurch gekennzeichnet, daß der Zusatzpflugkörper (9) hinter einem Tastrad (23) des Pfluges angeordnet ist.

8. Zusatzpflugkörper nach einem der Ansprüche 1 bis 7, dadurch gekennzeichnet, daß die Neigung des Zusatzpflugkörpers (9) relativ zum Arm (8) und damit zur Fahrtrichtung einstellbar ist.

9. Zusatzpflugkörper nach Anspruch 8, dadurch gekennzeichnet, daß die Verstellbarkeit durch einen zwischen dem Arm (8) und der Lasche (20) eingelegten Keil (22) bewirkt ist.

1|2

*Fig.1*

*Fig. 2*

0175865

**Fig. 3**

**Fig. 4**